# EUROPEAN PATENT APPLICATION

(11) **EP 4 811 737 A1**
(43) Date of publication of application: **23.09.2026**
(21) Application number: 25213511.6
(22) Date of filing: 04.11.2025
(51) Int. Cl.: H04L 41/069

(54) **RESILIENT LOGGING OF DEVICE EVENTS**

(30) Priority: 18.03.2025 US 202519083427
(71) Applicant: Yokogawa Electric Corporation, Musashino-shi, Tokyo 180-8750 (JP)
(72) Inventor: ORIDO, Archie Sambitan, Tokyo, 180-8750 (JP); YU, Thin Sapal, Tokyo, 180-8750 (JP)
(74) Representative: Henkel & Partner mbB

(57) **Abstract**

Logging event messages from a large number of devices that are of different types, have different manufacturers, and different reporting methodologies, is often challenging. Systems and methods are provided to parse event messages into a plurality of storage locations, such as specific files and/or files within a particular directory structure based on the type of event message. The type of message may be determined, in whole or in part, by the device's manufacturer, reporting format, and/or other descriptor. As a result, event messages may be segregated and corrupted messages may be identified by the file and/or directory. Additionally, when a particular file reaches a threshold, the file is "rotated," comprising closing the file and writing to a new file with an incremented file name while other files remain unaffected.

## Description

### FIELD OF THE DISCLOSURE

The invention relates generally to systems and methods for logging events from a plurality of devices and particularly to resiliently logging events to track the source of any particular event after a logging failure.

### BACKGROUND

Devices that perform and monitor operations in an industrial setting commonly report events to a central server for recording in a database. The events may include routine operations, exceptions, and alarms. There can be a significant number of variations of devices and the logging provided by each. For example, devices at a single industrial setting may vary by model (e.g., a five-year-old controller may report different events and/or may be in a different format than a twenty-year-old controller performing the same functions), type (e.g., a fan controller versus a pump controller), manufacturer, configurations, etc. The messages themselves may be variable. For example, one device may generate each event message to include the device's identifier, time stamp, state(s) of the device, and the event details. This can represent a significant amount of data. As a result, other devices may write blocks of messages with a header or first event message identifying the device followed by a number of individual event messages, such as may occur for devices that generate a large number of messages.

### SUMMARY

In the prior art, event messages are written to a single log file. The log file is often a stream of event messages that allows the log file to accommodate all forms and formats of event messages. However, faults may occur, such as when the single log file may become too large, corrupt, overwhelmed with messages, or otherwise fail to capture or maintain all events received. If a device reports an error or alarm, it may not be possible to identify the source or the root cause of the alarm when the single log file has not perfectly recorded all events. For example, if a header or first message that identifies the source of an event is absent from the single log file, the following messages logging the events may be unusable.

These and other needs are addressed by the various embodiments and configurations of the present invention. The present invention can provide a number of advantages depending on the particular configuration. These and other advantages will be apparent from the disclosure of the invention(s) contained herein.

In one embodiment, event messages are segregated into a plurality of types and logged to a corresponding plurality of files based on the type. The plurality of files may be further maintained in a file system providing more details about the type and/or source of the event messages. For example, the file name for each of the plurality of files and/or the directory structure naming convention may include one or more of device identifier, device type, operation type, timestamp, type of event log, location of device, etc.

In another embodiment, files of the plurality of files may be rotated, such as with an incremented file name. Upon an event, such as a file becoming too large or a time event (e.g., all events in 24-hour blocks), the file is closed and/or stored (e.g. no new log data will be written to it) and a new file is created to receive similar event messages, the new file having a name and/or position in a file directory that has been incremented, such as by incrementing an index number, adding a current timestamp, etc.

As a benefit of the foregoing, failures are less likely to occur or, if they do occur, have less of an impact. For example, once a file is closed it is very unlikely to become corrupted and an event message with a missing message identifying the source may still be identified, entirely or in part, based on what file the message is written to (and therefore message type and/or other source device attributes) and/or where in a directory structure the event is recorded.

In certain embodiments, messages and methodologies of a Global Discovery Server (GDS) are extended and/or modified from the standard messages and methodologies provided by the GDS. The GDS is a standard as published by the OPC Foundation (available at the web site "reference.opcfoundation.org") and is incorporated herein by reference.

In some aspects, the techniques described herein relate to a method of managing log data, including: receiving a plurality of event messages from a plurality of devices; and for each event message of the plurality of event messages: determining a message type of a set of previously determined types for the event message; and writing the event message to a first of a plurality of message logs corresponding to the message type, wherein the first of the plurality of message logs is identified by a file name.

In some aspects, the techniques described herein relate to a method, wherein writing the event message to the first of the plurality of message logs corresponding to the message type further includes: upon determining that the first of the plurality of message logs has reached a threshold, incrementing the file name and writing the event message log to a second of the plurality of message logs identified by the file name.

In some aspects, the techniques described herein relate to a method, wherein: writing the message log to the second of the plurality of message logs identified by the file name, further includes, reading a device identifier for one device of the plurality of devices from the message log; and the file name includes at least a portion of the device identifier.

In some aspects, the techniques described herein relate to a method, further including writing the device identifier to the second of the plurality of message logs.

In some aspects, the techniques described herein relate to a method, wherein the threshold includes at least one of a previously determined age or a previously determined size.

In some aspects, the techniques described herein relate to a method, wherein writing each message log to the second of the plurality of message logs identified by the file name further includes creating the second of the plurality of message logs in a location determined in accordance with the message type.

In some aspects, the techniques described herein relate to a method, wherein the message type includes one of a GlobalDiscoveryServer (GDS), a distributed control node (DCN), or function messages for Open Platform Communications Unified Architecture (OPC UA).

In some aspects, the techniques described herein relate to a method, wherein at least one message in the plurality of event messages includes transaction data, and wherein the transaction data includes one or more of: certificate management, user or PubSub key management, secure channel and session creation, validation and activation, or a device management log.

In some aspects, the techniques described herein relate to a method, further including identifying a source of the event message from a portion of one event message, that is absent any source identifiers, and the file name.

In some aspects, the techniques described herein relate to a method, wherein the file name further includes a directory location in a file system.

In some aspects, the techniques described herein relate to a system, including: receiving a plurality of event messages from a plurality of devices; and for each event message of the plurality of event messages: determining a message type of a set of previously determined types for the event message; and writing the event message to a first of a plurality of message logs corresponding to the message type, wherein the first of the plurality of message logs is identified by a file name.

In some aspects, the techniques described herein relate to a system, wherein writing the event message to the first of the plurality of message logs corresponding to the message type further includes: upon determining that the first of the plurality of message logs has reached a threshold, incrementing the file name and writing the event message to a second of the plurality of message logs identified by the file name.

In some aspects, the techniques described herein relate to a system, wherein: writing the message log to the second of the plurality of message logs identified by the file name, further includes, reading a device identifier for one device of the plurality of devices from the message log; and the file name includes at least a portion of the device identifier.

In some aspects, the techniques described herein relate to a system, further including writing the device identifier to the second of the plurality of message logs.

In some aspects, the techniques described herein relate to a system, wherein the threshold includes at least one of a previously determined age or a previously determined size.

In some aspects, the techniques described herein relate to a system, wherein writing each message log to the second of the plurality of message logs identified by the file name further includes creating the second of the plurality of message logs in a location determined in accordance with the message type.

In some aspects, the techniques described herein relate to a system, wherein the message type includes one of a GlobalDiscoveryServer (GDS), a distributed control node (DCN), or function messages for Open Platform Communications Unified Architecture (OPC UA).

In some aspects, the techniques described herein relate to a system, further including identifying a source of the event message from a portion of one event message, that is absent any source identifiers, and the file name.

In some aspects, the techniques described herein relate to a system, wherein the file name further includes a directory location in a file system.

In some aspects, the techniques described herein relate to a computer-readable medium coupled to a processor, the medium including one or more computer readable instructions, the processor executing the one or more computer readable instructions to: receive a plurality of event messages from a plurality of devices; and for each event message of the plurality of event messages: determine a message type of a set of previously determined types for the event message; and write the event message to a first of a plurality of message logs corresponding to the message type, wherein the first of the plurality of message logs is identified by a file name.

A system on a chip (SoC) including any one or more of the above aspects or aspects of the embodiments described herein.

One or more means for performing any one or more of the above or aspects of the embodiments described herein.

Any aspect in combination with any one or more other aspects.

Any one or more of the features disclosed herein.

Any one or more of the features as substantially disclosed herein.

Any one or more of the features as substantially disclosed herein in combination with any one or more other features as substantially disclosed herein.

Any one of the aspects/features/embodiments in combination with any one or more other aspects/features/embodiments.

Use of any one or more of the aspects or features as disclosed herein.

Any of the above aspects or aspects of the embodiments described herein, wherein the data storage comprises a non-transitory storage device, which may further comprise at least one of: an on-chip memory within the processor, a register of the processor, an on-board memory co-located on a processing board with the processor, a memory accessible to the processor via a bus, a magnetic media, an optical media, a solid-state media, an input-output buffer, a memory of an input-output component in communication with the processor, a network communication buffer, and a networked component in communication with the processor via a network interface.

It is to be appreciated that any feature described herein can be claimed in combination with any other feature(s) as described herein, regardless of whether the features come from the same described embodiment.

The phrases "at least one," "one or more," "or," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B, and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware , an embodiment that is entirely software (including firmware, resident software, micro-code, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible, non-transitory medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below. Also, while the disclosure is presented in terms of exemplary embodiments, it should be appreciated that an individual aspect of the disclosure can be separately claimed.

### BRIEF DESCRIPTION OF THE DRAWINGS

The present disclosure is described in conjunction with the appended figures:
Fig. 1 depicts a system in accordance with embodiments of the present disclosure;
Fig. 2 depicts a process in accordance with embodiments of the present disclosure;
Fig. 3 depicts a process in accordance with embodiments of the present disclosure; and
Fig. 4 depicts a device of a system in accordance with embodiments of the present disclosure.

### DETAILED DESCRIPTION

The ensuing description provides embodiments only and is not intended to limit the scope, applicability, or configuration of the claims. Rather, the ensuing description will provide those skilled in the art with an enabling description for implementing the embodiments. It will be understood that various changes may be made in the function and arrangement of elements without departing from the spirit and scope of the appended claims.

Any reference in the description comprising a numeric reference number, without an alphabetic sub-reference identifier when a sub-reference identifier exists in the figures, when used in the plural, is a reference to any two or more elements with the like reference number. When such a reference is made in the singular form, but without identification of the sub-reference identifier, it is a reference to one of the like numbered elements, but without limitation as to the particular one of the elements being referenced. Any explicit usage herein to the contrary or providing further qualification or identification shall take precedence.

The exemplary systems and methods of this disclosure will also be described in relation to analysis software, modules, and associated analysis hardware. However, to avoid unnecessarily obscuring the present disclosure, the following description omits well-known structures, components, and devices, which may be omitted from or shown in a simplified form in the figures or otherwise summarized.

For purposes of explanation, numerous details are set forth in order to provide a thorough understanding of the present disclosure. It should be appreciated, however, that the present disclosure may be practiced in a variety of ways beyond the specific details set forth herein.

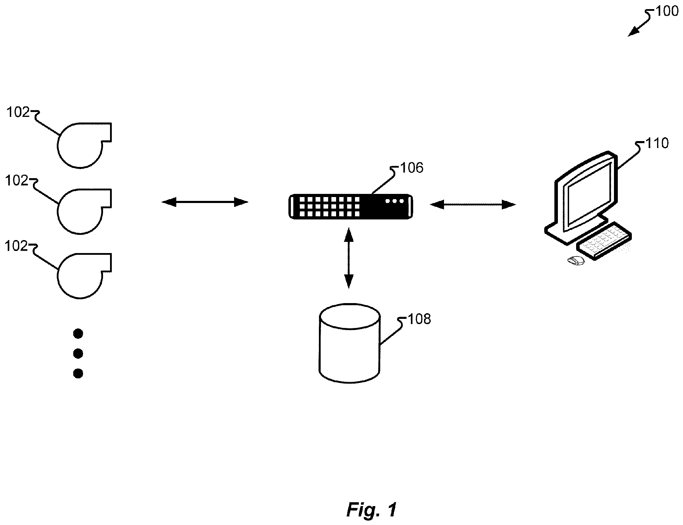

Fig. 1 illustrates system 100 in accordance with embodiments of the present disclosure. In one embodiment, system 100 illustrates components comprising one or more devices 102, computing components 106, 108, and 110 and a data storage component (e.g., data storage 108) interconnected, such as via a network. It should be appreciated that, in one embodiment, each of the illustrated components provides a single service. However, one of ordinary skill in the art will recognize that other topologies may be deployed without departing from the scope of embodiments herein. For example, server 106 may be combined with data storage 108, computer 110 and/or other computing or data storage components. In another embodiment, any one computing component may be embodied as a plurality of computing components. In one embodiment, the components as illustrated by system 100 perform a single function, in other embodiments, one or more computing components may perform a plurality of functions and/or one or more functions may be performed by a plurality of computing components including as a service (e.g., software as a service (SaaS)). For example, data storage 108 may be a single device or a collection of devices (e.g., a storage array, "cloud" storage, etc.). In yet another embodiment, the network connection topology may be the topology as illustrated in system 100, or another topology without departing from the scope of the embodiments.

Devices 102 generate and transmit event messages to server 106 for processing, storing in data storage 108, and/or display by computer 110. Event messages are variously embodied and include, but are not limited to, power-up, initiating power-down, current status, errors, alarms, operations, etc. Devices 102 may provide event messages that are homogeneous or heterogeneous. For example, devices 102 may be different types of devices, devices from different manufacturers utilizing different models of the same type of device, etc. As a result, event messages may comprise dissimilar information and/or a dissimilar format. Further complications to system 100 occur when devices 102 report at different rates, which may require optimization. For example, one device 102 may power up, run at a particular setting for a long period of time (e.g., days, weeks, or longer), and then be shut down. Over the course of a relatively long period of time, there may be relatively few event messages. As a result, such event messages may be detailed and verbose, such as to include the specific device 102 identifier, manufacture, device description, install location, timestamp, current settings, current sensor readings, time spent performing an operation, etc. Another specific device 102 may perform many operations (e.g., one every five minutes to several every second). Device 102 may be configured to generate a large volume of event messages. For example, one device 102 may be an actuator for a solenoid that alternates between two positions quickly (e.g., several times a minute, several times a second, etc.). As a result, certain devices 102 that are configured to generate a large volume of messages may generate event messages that are more succinct, such as to generate event messages that identify a particular event and omit other information, such as the source of such a message. The omitted source information or other omitted information may be periodically included in certain event messages (e.g., startup, the first event message after startup, periodically, etc.).

Because of the volume and variety of messages, data storage 108 may receive event messages faster than they can be recorded, storage files within or attached to data storage 108 may reach a maximum size, files may become corrupted/truncated, or other issues may cause data storage 108 to be unable to accurately maintain each event message. One device 102 may provide an event message with an identifier and then send a series of additional event messages that omit the identifier. If data storage 108 cannot access all event messages, such as to identify the source of a subsequent alarm event message, then the source device 102 of an event message(s) cannot be determined. It may not be possible to locate the source of an alarm, error, current state, past state, sensor reading, etc., even if the event message reporting such information is intact.

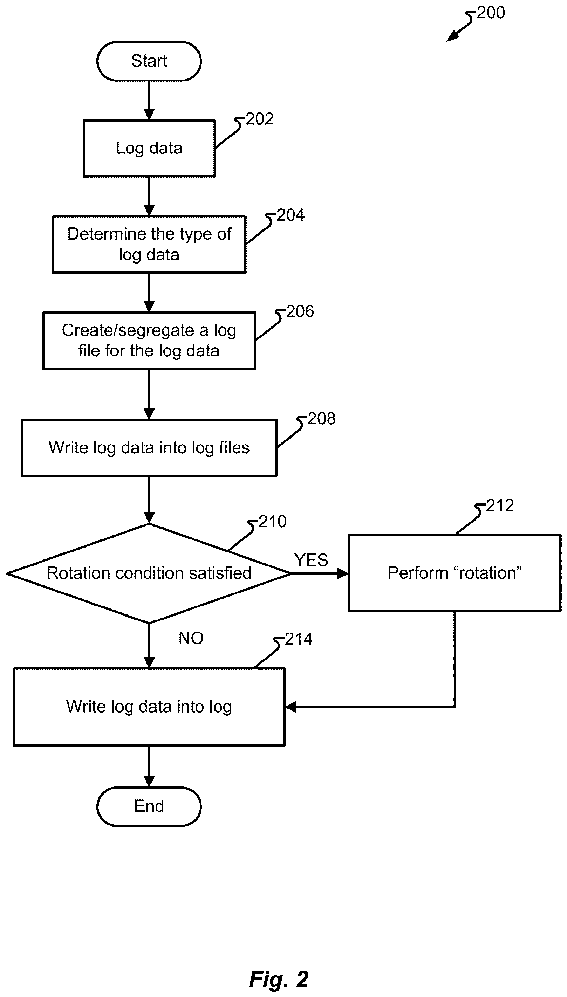

Fig. 2 depicts process 200 in accordance with embodiments of the present disclosure. In one embodiment, process 200 is embodied as machine-readable instructions maintained in a non-transitory memory that when read by a machine, such as a processors of a server, cause the machine to execute the instructions and thereby execute process 200. The processor of the server may include, but is not limited to, at least one processor of server 106, computer 110, and/or another electronic processing device or component.

Process 200 begins and, at step 202, logs data. The data logs may comprise event messages from one or more devices 102. Step 204 determines the type of log data. The differentiation of log data by "type" is variously embodied. In one embodiment, the type is a category of devices (e.g., all compressors are one type, all heaters are another type, all chillers are another type, etc.). In another embodiment, the type is a model or feature (e.g., pumps may be categorized by their volume per minute and the resulting type refers to a single or range of volume(s) for the pumps therein). In yet another embodiment, the type may be a manufacture and/or reporting standard, reporting format, etc. Types may be more specific, such as the reporting standard for a particular device 102. Such types may include, but are not limited to, a GlobalDiscoveryServer (GDS), a distributed control node (DCN), and function messages for Open Platform Communications Unified Architecture (OPC UA).

Step 206 creates a log file for the log data of the type determined in step 204. If such a log file for the log data type determined already exists, step 206 may then segregate the log file. For example, step 206 may segregate a GDS file according to a plurality of DCNs, such as to capture identifiers of the source device 102 of a particular event message to one target DCN file associated with one of the plurality of DCNs. In this way, the GDS file may be limited to only GDS data and, while capable of storing DCN data, the DCN data is written to the DCN file.

Step 208 writes log data to the log file and test 210 determines if a rotation condition is satisfied. If test 210 is true, then, in step 212, the rotation is performed. Step 212 then performs the rotation. A rotation condition causes one file, such as the file written to in step 208, has satisfied a threshold. The threshold may be one or more of a file size, number of records in the file, number of files allowed to be rotated, time frame, etc. if necessary, and take the current file's file name, apply an incrementation methodology to the file name, and create a new file with the incremented file name. Any subsequent writings (e.g., step 208) will then be written to the new file, in step 214, with the incremented file time. The (now) previous file may optionally be moved to other storage different from data storage 108 and/or subjected to further analysis by server 106, computer 110, and/or another processing device.

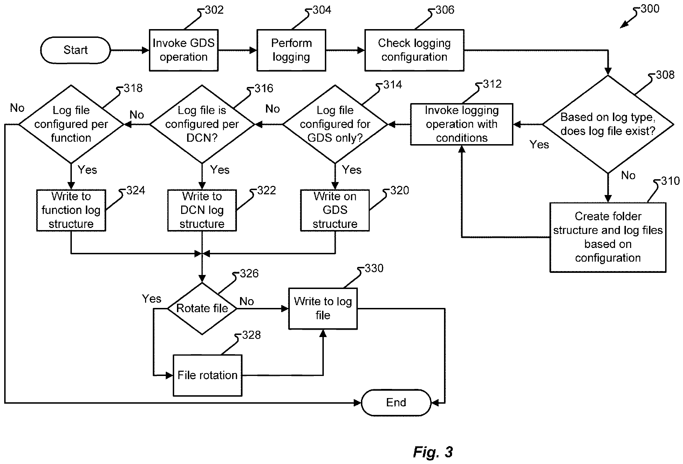

Fig. 3 depicts process 300 in accordance with embodiments of the present disclosure. In one embodiment, process 300 is embodied as machine-readable instructions maintained in a non-transitory memory that when read by a machine, such as processors of a server, cause the machine to execute the instructions and thereby execute process 300. The processor of the server may include, but is not limited to, at least one processor of server 106, computer 110, and/or another electronic processing device or component.

In one embodiment, process 300 begins and, in step 302, a device (e.g., device(s) 102) invokes a GDS operation, which is logged as an event message in step 304. Step 306 checks logging configuration and, if test 308 determines no log file exists (for the log type), step 310 creates a folder structure and log files based on the configuration. For example, a folder structure may be based on time (e.g., month with sub-folders for days, days with sub-folders for hours, etc.), type of device (e.g., devices performing a particular process and sub-folders for groups or specific devices), operation of devices, etc. Additionally or alternatively, files and/or the folder structure may be made in accordance with individual devices 102. For example, a file name may be specific to one particular device 102. As a result, step 330 may write logs to a log files of a collection of log files, each having logs that are specific to one device 102.

After step 310 or when test 308 is determined to be true, processing continues to step 312 to invoke logging operation with conditions. Conditions are variously embodied and may include any of the foregoing (e.g., writing a log to a particular file in a particular location within a folder structure, particular formatting, etc.).

Test 314 determines if the log file is configured for GDS only and, if true, writes the log to the log for the GDS file structure in step 320. If test 314 is false, test 316 determines if the log file is configured per DCN and, if true, writes the log to the DCN log structure in step 322. If test 316 is false, test 318 determines if the log file is configured per function and, if true, writes the log to the function log structure in step 324. If test 318 is false, then process 300 may end.

After steps 320, 322, or 324, test 326 determines if the file should be rotated and, if true, step 328 rotates the file, such as to close the file, increment the file name, and create a new file with the incremented file name to receive the log in step 330. Rotation may be performed as per test 210 (see Fig. 2). If test 326 is false, processing continues directly to step 330, i.e. the file does not satisfy the rotation condition, continue to write log data into the current file.

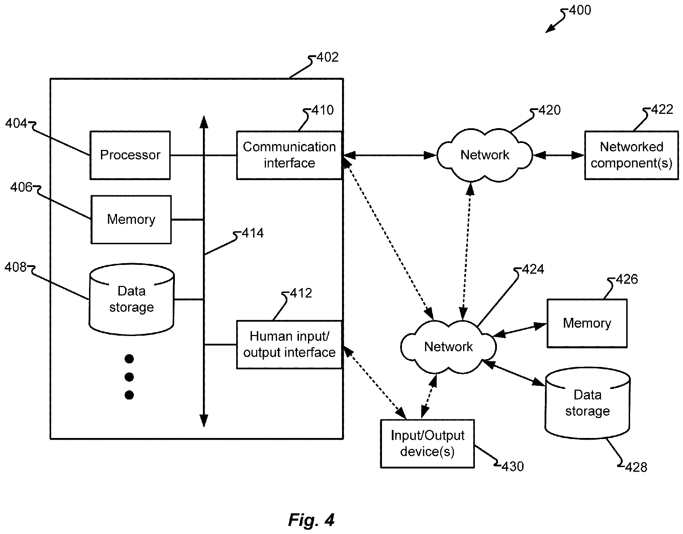

Fig. 4 depicts device 402 in system 400 in accordance with embodiments of the present disclosure. In one embodiment, device 102, server 106, and/or computer 110 may be embodied, in whole or in part, as device 402 comprising various components and connections to other components and/or systems. The components are variously embodied and may comprise processor 404. The term "processor," as used herein, refers exclusively to electronic hardware components comprising electrical circuitry with connections (e.g., pin-outs) to convey encoded electrical signals to and from the electrical circuitry. Processor 404 may comprise programmable logic functionality, such as determined, at least in part, from accessing machine-readable instructions maintained in a non-transitory data storage, which may be embodied as circuitry, on-chip read-only memory, computer memory 406, data storage 408, etc., that cause the processor 404 to perform the steps of the instructions. Processor 404 may be further embodied as a single electronic microprocessor or multiprocessor device (e.g., multicore) having electrical circuitry therein which may further comprise a control unit(s), input/output unit(s), arithmetic logic unit(s), register(s), primary memory, and/or other components that access information (e.g., data, instructions, etc.), such as received via bus 414, executes instructions, and outputs data, again such as via bus 414. In other embodiments, processor 404 may comprise a shared processing device that may be utilized by other processes and/or process owners, such as in a processing array within a system (e.g., blade, multi-processor board, etc.) or distributed processing system (e.g., "cloud", farm, etc.). It should be appreciated that processor 404 is a non-transitory computing device (e.g., electronic machine comprising circuitry and connections to communicate with other components and devices). Processor 404 may operate a virtual processor, such as to process machine instructions not native to the processor (e.g., translate the VAX operating system and VAX machine instruction code set into Intel^{®} 9xx chipset code to enable VAX-specific applications to execute on a virtual VAX processor). However, as those of ordinary skill understand, such virtual processors are applications executed by hardware, more specifically, the underlying electrical circuitry and other hardware of the processor (e.g., processor 404). Processor 404 may be executed by virtual processors, such as when applications (i.e., Pod) are orchestrated by Kubernetes. Virtual processors enable an application to be presented with what appears to be a static and/or dedicated processor executing the instructions of the application, while underlying non-virtual processor(s) are executing the instructions and may be dynamic and/or split among a number of processors.

In addition to the components of processor 404, device 402 may utilize computer memory 406 and/or data storage 408 for the storage of accessible data, such as instructions, values, etc. Communication interface 410 facilitates communication with components, such as processor 404 via bus 414 with components not accessible via bus 414 and may be embodied as a network interface (e.g., ethernet card, wireless networking components, USB port, etc.). Communication interface 410 may be embodied as a network port, card, cable, or other configured hardware device. Additionally or alternatively, human input/output interface 412 connects to one or more interface components to receive and/or present information (e.g., instructions, data, values, etc.) to and/or from a human and/or electronic device. Examples of input/output devices 430 that may be connected to input/output interface include, but are not limited to, keyboard, mouse, trackball, printers, displays, sensor, switch, relay, speaker, microphone, still and/or video camera, etc. In another embodiment, communication interface 410 may comprise, or be comprised by, human input/output interface 412. Communication interface 410 may be configured to communicate directly with a networked component or configured to utilize one or more networks, such as network 420 and/or network 424.

Network 420 may be a wired network (e.g., Ethernet), wireless (e.g., WiFi, Bluetooth, cellular, etc.) network, or combination thereof and enable device 402 to communicate with networked component(s) 422. In other embodiments, network 420 may be embodied, in whole or in part, as a telephony network (e.g., public switched telephone network (PSTN), private branch exchange (PBX), cellular telephony network, etc.).

Additionally or alternatively, one or more other networks may be utilized. For example, network 424 may represent a second network, which may facilitate communication with components utilized by device 402. For example, network 424 may be an internal network to a business entity or other organization, whereby components are trusted (or at least more so) than networked components 422, which may be connected to network 420 comprising a public network (e.g., Internet) that may not be as trusted.

Components attached to network 424 may include computer memory 426, data storage 428, input/output device(s) 430, and/or other components that may be accessible to processor 404. For example, computer memory 426 and/or data storage 428 may supplement or supplant computer memory 406 and/or data storage 408 entirely or for a particular task or purpose. As another example, computer memory 426 and/or data storage 428 may be an external data repository (e.g., server farm, array, "cloud," etc.) and enable device 402, and/or other devices, to access data thereon. Similarly, input/output device(s) 430 may be accessed by processor 404 via human input/output interface 412 and/or via communication interface 410 either directly, via network 424, via network 420 alone (not shown), or via networks 424 and 420. Each of computer memory 406, data storage 408, computer memory 426, data storage 428 comprise a non-transitory data storage comprising a data storage device.

It should be appreciated that computer readable data may be sent, received, stored, processed, and presented by a variety of components. It should also be appreciated that components illustrated may control other components, whether illustrated herein or otherwise. For example, one input/output device 430 may be a router, a switch, a port, or other communication component such that a particular output of processor 404 enables (or disables) input/output device 430, which may be associated with network 420 and/or network 424, to allow (or disallow) communications between two or more nodes on network 420 and/or network 424. One of ordinary skill in the art will appreciate that other communication equipment may be utilized, in addition or as an alternative, to those described herein without departing from the scope of the embodiments.

In the foregoing description, for the purposes of illustration, methods were described in a particular order. It should be appreciated that in alternate embodiments, the methods may be performed in a different order than that described without departing from the scope of the embodiments. It should also be appreciated that the methods described above may be performed as algorithms executed by hardware components (e.g., circuitry) purpose-built to carry out one or more algorithms or portions thereof described herein. In another embodiment, the hardware component may comprise a general-purpose microprocessor (e.g., CPU, GPU) that is first converted to a special-purpose microprocessor. The special-purpose microprocessor then having had loaded therein encoded signals causing the, now special-purpose, microprocessor to maintain machine-readable instructions to enable the microprocessor to read and execute the machine-readable set of instructions derived from the algorithms and/or other instructions described herein. The machine-readable instructions utilized to execute the algorithm(s), or portions thereof, are not unlimited but utilize a finite set of instructions known to the microprocessor. The machine-readable instructions may be encoded in the microprocessor as signals or values in signal-producing components by, in one or more embodiments, voltages in memory circuits, configuration of switching circuits, and/or by selective use of particular logic gate circuits. Additionally or alternatively, the machine-readable instructions may be accessible to the microprocessor and encoded in a media or device as magnetic fields, voltage values, charge values, reflective/non-reflective portions, and/or physical indicia.

In another embodiment, the microprocessor further comprises one or more of a single microprocessor, a multi-core processor, a plurality of microprocessors, a distributed processing system (e.g., array(s), blade(s), server farm(s), "cloud", multi-purpose processor array(s), cluster(s), etc.) and/or may be co-located with a microprocessor performing other processing operations. Any one or more microprocessors may be integrated into a single processing appliance (e.g., computer, server, blade, etc.) or located entirely, or in part, in a discrete component and connected via a communications link (e.g., bus, network, backplane, etc. or a plurality thereof).

Examples of general-purpose microprocessors may comprise, a central processing unit (CPU) with data values encoded in an instruction register (or other circuitry maintaining instructions) or data values comprising memory locations, which in turn comprise values utilized as instructions. The memory locations may further comprise a memory location that is external to the CPU. Such CPU-external components may be embodied as one or more of a fieldprogrammable gate array (FPGA), read-only memory (ROM), programmable read-only memory (PROM), erasable programmable read-only memory (EPROM), random access memory (RAM), bus-accessible storage, network-accessible storage, etc.

These machine-executable instructions may be stored on one or more machine-readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

In another embodiment, a microprocessor may be a system or collection of processing hardware components, such as a microprocessor on a client device and a microprocessor on a server, a collection of devices with their respective microprocessor, or a shared or remote processing service (e.g., "cloud" based microprocessor). A system of microprocessors may comprise task-specific allocation of processing tasks and/or shared or distributed processing tasks. In yet another embodiment, a microprocessor may execute software to provide the services to emulate a different microprocessor or microprocessors. As a result, a first microprocessor, comprised of a first set of hardware components, may virtually provide the services of a second microprocessor whereby the hardware associated with the first microprocessor may operate using an instruction set associated with the second microprocessor.

While machine-executable instructions may be stored and executed locally to a particular machine (e.g., personal computer, mobile computing device, laptop, etc.), it should be appreciated that the storage of data and/or instructions and/or the execution of at least a portion of the instructions may be provided via connectivity to a remote data storage and/or processing device or collection of devices, commonly known as "the cloud," but may include a public, private, dedicated, shared and/or other service bureau, computing service, and/or "server farm."

Examples of the microprocessors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 microprocessor with 64-bit architecture, Apple^{®} M7 motion comicroprocessors, Samsung^{®} Exynos^{®} series, the Intel^{®} Core^{™} family of microprocessors, the Intel^{®} Xeon^{®} family of microprocessors, the Intel^{®} Atom^{™} family of microprocessors, the Intel Itanium^{®} family of microprocessors, Intel^{®} Core^{®} i5-4670K and i7-4770K 22nm Haswell, Intel^{®} Core^{®} i5-3570K 22nm Ivy Bridge, the AMD^{®} FX^{™} family of microprocessors, AMD^{®} FX-4300, FX-6300, and FX-8350 32nm Vishera, AMD^{®} Kaveri microprocessors, Texas Instruments^{®} Jacinto C6000^{™} automotive infotainment microprocessors, Texas Instruments^{®} OMAP^{™} automotive-grade mobile microprocessors, ARM^{®} Cortex^{™}-M microprocessors, ARM^{®} Cortex-A and ARM926EJ-S^{™} microprocessors, other industry-equivalent microprocessors, and may perform computational functions using any known or future-developed standard, instruction set, libraries, and/or architecture.

Any of the steps, functions, and operations discussed herein can be performed continuously and automatically.

The exemplary systems and methods of this invention have been described in relation to communications systems and components and methods for monitoring, enhancing, and embellishing communications and messages. However, to avoid unnecessarily obscuring the present invention, the preceding description omits a number of known structures and devices. This omission is not to be construed as a limitation of the scope of the claimed invention. Specific details are set forth to provide an understanding of the present invention. It should, however, be appreciated that the present invention may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components or portions thereof (e.g., microprocessors, memory/storage, interfaces, etc.) of the system can be combined into one or more devices, such as a server, servers, computer, computing device, terminal, "cloud" or other distributed processing, or collocated on a particular node of a distributed network, such as an analog and/or digital telecommunications network, a packet-switched network, or a circuitswitched network. In another embodiment, the components may be physical or logically distributed across a plurality of components (e.g., a microprocessor may comprise a first microprocessor on one component and a second microprocessor on another component, each performing a portion of a shared task and/or an allocated task). It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the invention.

A number of variations and modifications of the invention can be used. It would be possible to provide for some features of the invention without providing others.

In yet another embodiment, the systems and methods of this invention can be implemented in conjunction with a special purpose computer, a programmed microprocessor or microcontroller and peripheral integrated circuit element(s), an ASIC or other integrated circuit, a digital signal microprocessor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention. Exemplary hardware that can be used for the present invention includes computers, handheld devices, telephones (e.g., cellular, Internet enabled, digital, analog, hybrids, and others), and other hardware known in the art. Some of these devices include microprocessors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein as provided by one or more processing components.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

Embodiments herein comprising software are executed, or stored for subsequent execution, by one or more microprocessors and are executed as executable code. The executable code being selected to execute instructions that comprise the particular embodiment. The instructions executed being a constrained set of instructions selected from the discrete set of native instructions understood by the microprocessor and, prior to execution, committed to microprocessor-accessible memory. In another embodiment, human-readable "source code" software, prior to execution by the one or more microprocessors, is first converted to system software to comprise a platform (e.g., computer, microprocessor, database, etc.) specific set of instructions selected from the platform's native instruction set.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

## Claims

1. A method of managing log data, comprising:
receiving a plurality of event messages from a plurality of devices (102, 430); and
for each event message of the plurality of event messages:
determining a message type of a set of previously determined types for the event message; and
writing the event message to a first of a plurality of message logs corresponding to the message type, wherein the first of the plurality of message logs is identified by a file name.

2. The method of claim 1, wherein writing the event message to the first of the plurality of message logs corresponding to the message type further comprises:
upon determining that the first of the plurality of message logs has reached a threshold, incrementing the file name and writing the event message to a second of the plurality of message logs identified by the file name.

3. The method of claim 2, wherein:
writing the message log to the second of the plurality of message logs identified by the file name, further comprises, reading a device identifier for one device of the plurality of devices (102, 430) from the message log; and
the file name comprises at least a portion of the device identifier.

4. The method of claim 3, further comprising writing the device identifier to the second of the plurality of message logs.

5. The method of any of claims 2 to 4, wherein the threshold comprises at least one of a previously determined age or a previously determined size.

6. The method of any of claims 2 to 5, wherein writing each message log to the second of the plurality of message logs identified by the file name further comprises creating the second of the plurality of message logs in a location determined in accordance with the message type.

7. The method of any of claims 1 to 6, wherein the message type comprises one of a GlobalDiscoveryServer (GDS), a distributed control node (DCN), or function messages for Open Platform Communications Unified Architecture (OPC UA).

8. The method of any of claims 1 to 7 , wherein at least one message in the plurality of event messages comprises transaction data, and wherein the transaction data comprises one or more of: certificate management, user or PubSub key management, secure channel and session creation, validation and activation, or a device management log.

9. The method of any of claims 1 to 8, further comprising identifying a source of the event message from a portion of one event message, that is absent any source identifiers, and the file name.

10. The method of any of claims 1 to 9, wherein the file name further comprises a directory location in a file system.

11. A system (100, 400), comprising:
a plurality of devices (102, 430); and
configured to carry out the method of any of claims 1 to 10.

12. A computer program comprising instructions which, when the program is
executed by a computer, cause the computer to carry out the method of any of claims 1 to 10.

13. A computer-readable medium storing a computer program according to claim 12.
